# EUROPEAN PATENT SPECIFICATION

(11) **EP 1 599 086 B1**
(45) Date of publication and mention of the grant of the patent: **04.06.2008**
(21) Application number: 04711075.4
(22) Date of filing: 13.02.2004
(51) Int. Cl.: A01G 9/24

(54) **SYSTEM FOR CULTIVATION OF PLANTS**
SYSTEM ZUM ANBAU VON PFLANZEN
SYSTEME DE CULTURE DE PLANTES

(30) Priority: 14.02.2003 SE 0300425
(43) Date of publication of application: 30.11.2005
(73) Proprietor: BJÖRKEBO GARD AB, S-260 34 Mörarp (SE)
(72) Inventor: NILSSON, Bo-Arne, 260 34 Mörarp (SE)
(74) Representative: Andersson, Mikael Per Robert
(86) International application number: PCT/SE2004/000184
(87) International publication number: WO 2004/071174

(56) References cited:
- DE-A1- 3 331 256
- NL-C2- 1 014 378
- SE-B- 421 370
- US-A- 4 837 971

## Description

### Field of the Invention

The present invention relates to a system and a method for cultivation of plants in a greenhouse comprising two cultivation rooms and an intermediate work passage, and elongate cultivation tables which are arranged to be movable in the longitudinal direction between the cultivation rooms.

### Background Art

In conventional cultivation of plants in a greenhouse, plants are usually put in pots or some other type of container in order to be placed close to each other on benches or tables in the greenhouse where they are fast grown to a suitable size according to known methods. The cultivation tables or benches are fixedly mounted in the greenhouse in long rows, with work passages between the rows of cultivation tables. In such conventional cultivation of plants, the entire space in the greenhouse is used day and night, and for the cultivation to yield a good return, the greenhouse must be heated to a suitable and even temperature.

Energy-saving measures that have been introduced in recent years in most lines of business have evoked the idea of achieving saving of energy also in cultivation of plants in greenhouses. Greenhouses of different kinds are mostly heated by oil firing. Especially at Northern latitudes where there is only a fairly small amount of solar heat, large amounts of energy are required to keep a constant and sufficient temperature in the greenhouse.

Patent Application SE 8003230-3 discloses a device by means of which thermal energy to a greenhouse can be saved by only half the space of the greenhouse being heated in the darkest and coldest part of the day. This is allowed by the device being configured so as to perform gathering of the plants to a smaller, heated area in the greenhouse. More specifically, this device comprises movable cultivation tables which with plants placed on them can be moved, one below the other or juxtaposed, to the heated space, for instance in the night hours, so as then in the daytime to be spread out to the entire greenhouse for care and other operations. According to the solution where the cultivation tables can be arranged one under the other, they are elongate and arranged to be movable in the longitudinal direction in two horizontal planes on posts which are arranged in pairs in long parallel rows. The cultivation tables can be collected in one half of the greenhouse by, for example, the cultivation tables in the lower plane being inserted under the cultivation tables in the upper plane.

The device described in SE 8003230-3 makes it possible to achieve saving of energy by the heated area being limited in the night hours for instance. However, a problem arising in connection with this type of energy-saving measure is that it must be possible to heat that part of the greenhouse which was not heated at night, in a rather quick and effective manner, thus allowing plants to be placed there again. It should be possible to distribute the heat quickly and evenly so that a favourable environment is achieved once more in the entire greenhouse.

The completely predominant type of heating system for all-the-year-round production of plants is waterborne heating. When a greenhouse part which has been unheated for a long period is to be heated up, a conventional waterborne heating system is not an efficient solution since it does not allow quick and even distribution of the heat.

Another problem which plant breeders frequently encounter is that the relative humidity in the greenhouse becomes excessively high, in particular when the cultivation surfaces are large, because of irrigation and transpiration of the plants. A high relative humidity makes the environment favourable for different types of fungi, such as mould fungi, which attack the cultivated plants. This deteriorates the quality of the plants significantly and at the same time deteriorates the environment in the room for cultivation of plants. Just as it is injurious to health to be staying in houses having mildew problems, it is injurious to the health of greenhouse staff to be staying in a cultivation room where the plants are attacked by mould. Moreover, a high relative humidity creates problems with deposit of dew on the plants if the heat is not distributed efficiently enough in the greenhouse. Dew on the plants further facilitates attacks of mould and other fungi. The problem with deposit of dew is also made worse by the fact that part of the greenhouse is allowed to be unheated for some time and then be heated up again, since the heat is not distributed efficiently enough.

Patent publication SE 421370 (application SE8003685-8) discloses an installation for cultivation of plants in a programmed environment in special, well-insulated cultivation rooms where light, temperature and relative humidity are kept in optimal conditions, in contrast to ordinary greenhouses where the outdoor climate affects the indoor climate to a greater degree. To provide suitable air conditions in this programmed environment, a main conduit with a number of branch conduits is arranged so that air is discharged under the plants standing in cultivation channels through a number of gill openings on the underside of the branch conduits. Here the air is given a suitable composition by mixing hot and cold air, carbon dioxide and fresh outdoor air. Moreover, the air is moistened by water supplied by sprinklers and mist nozzles. At the ceiling of the room there are evacuation holes for the supplied air, thus allowing the air to circulate by fans. The cultivation channels are arranged above the branch conduits on fixedly mounted stands and can be moved to another cultivation room by being put on a carriage which is then transported to the other cultivation room.

However, the type of "programmed" cultivation of plants according to SE 421370 is not suited for large-scale greenhouse cultivation, on the one hand because large greenhouses are difficult to make so well insulated as is required by the programmed cultivation of plants and, on the other hand, because the transport of cultivation channels would be too ungainly and laborious. Nor does SE 421370 describe how supplied heat is to be distributed quickly and evenly in an entire greenhouse. Nor does SE 421370 discuss the above problems with high relative humidity, but instead how *more* moisture is supplied by the above-mentioned sprinklers and mist nozzles.

### Summary of the Invention

An object of the present invention is to provide an improved system and an improved method for cultivation of plants in a greenhouse.

A special object of the present invention is to provide an improved environment in a greenhouse, both for the plants and for staff working in the greenhouse.

These and other objects are achieved by a system as defined in claim 1 and by a method as defined in claim 18. Preferred embodiments will be evident from the dependent claims.

More specifically, an inventive system for cultivation of plants in a greenhouse comprising two cultivation rooms and an intermediate work passage, and elongate cultivation tables which are arranged to be movable in the longitudinal direction between the cultivation rooms, is characterised in that it further comprises an air supply device arranged under said cultivation tables for directing a flow of air up through an area for cultivation of plants on said cultivation tables, and a fan installation for forcing the directed flow of air.

The present invention efficiently solves the problems with high relative humidity, fungus attacks and the difficulty of quickly and evenly heating a previously unheated cultivation room by the flow of air being forced through the area for cultivation of plants. The forced flow of air has a drying effect so that the relative humidity can be kept down. This reduces the risk of fungus attack and facilitates the transpiration of the plants.

Efficient heating of the entire cultivation room can be provided according to the present invention by heating the air before being supplied to the room. Since the flow of air is forced, it does not have to be heated to the same extent for the room to be heated. The temperature is distributed more evenly in the entire cultivation room - there will be no warm and cold zones. An important reason why warm and cold zones in the cultivation room should be avoided is that warm air contains more water per unit of volume than cold air at the same relative humidity. When warm air, for instance the air which in a conventional system by thermal motion rises from a water pipe, meets air which is several degrees colder round the foliages of the plants and thus is cooled, dew will deposit in the form of water droplets since the air when being cooled can no longer carry the same amount of water. Because of the forcing of the flow of air that is provided by the present invention, the air moves much faster and thus does not have time to be cooled to the same extent round and against the foliages of the plants. Nor does the air have to be heated to the same extent from the beginning since the air is distributed more efficiently in the cultivation room. Therefore the temperature gradient will not be very great, and the forced air will be cooled less and over a longer distance. Consequently the dew point round the foliages will not be passed, which would otherwise make dew deposit on the plants.

A further advantage of the invention is that it enables use of relatively well insulated "multispan houses", that is to say greenhouses with walls consisting of double layers of plastic with an air gap between the plastic layers. The good insulation of such a multispan house results in a saving of energy of about 20% compared with conventional glasshouses. Moreover, it produces good lighting conditions for the plants by making incident sunlight diffuse and letting through ultraviolet light. Since multispan houses are so well insulated, plant breeders using conventional ventilation systems will have great problems with high relative humidity in such houses. As a result, they must use expensive dehumidifiers and maybe also regularly open for airing, in which case the purpose of the good insulation will be lost. The present invention makes it possible to reduce the need for dehumidifiers and completely eliminate the need for airing.

By using cultivation tables which are movable in the longitudinal direction, the advantage is obtained that an air supply device can be arranged under the tables and even aligned with their longitudinal direction. By the tables being movable and accessible from the work passage, thus making it unnecessary to enter the cultivation rooms, there will be full freedom of positioning and extending the air supply device.

When the cultivation tables are arranged to be moved in the longitudinal direction, the tables can be arranged in parallel close to each other without work passages between them since, when the table is moved in its longitudinal direction, it is nevertheless possible to reach the entire surface of the table from said work passage. The cultivation tables being arranged close to each other also implies that the resistance which the tables offer the rising flow of air is uniformly distributed over the cultivation room, thereby further facilitating an even distribution of the supplied air.

By preferably arranging cultivation tables in two or more horizontal planes one above the other, the entire greenhouse can be utilised maximally since cultivation tables on a lower horizontal plane cover one half of the greenhouse while cultivation tables on a higher horizontal plane cover the other half of the greenhouse. To save energy, for instance, in the night hours, this system makes it possible to position the cultivation tables on the two horizontal planes one above the other in one half of the greenhouse, screen off the other half of the greenhouse and then reduce the heating of this other half of the greenhouse. As mentioned above, the present invention gives a great advantage since, by the efficient heating which is provided by a forced flow of heated air, it is possible to quickly reheat part of a greenhouse where the temperature has fallen, either because of intentional saving of energy or because of, for instance, a broken down boiler.

According to one embodiment of the present invention, the system further comprises an air lock for letting out air from said cultivation room, which air has passed through said area for cultivation of plants. By means of the air lock for letting out air from the cultivation room, in combination with the air supply device for supplying air to the room, efficient ventilation of the same is achieved, thus allowing temperature and relative humidity to be set at levels which are favourable for plants as well as staff. By the forced inflow of air to the cultivation room, in combination with a passive outflow of air through the air lock, a pressure above atmospheric is produced in the entire cultivation room, which results in the air being forced to flow up through the area for cultivation of plants and further towards the air lock and out through the same. Owing to this "compelling" pressure above atmospheric, the air is made to flow upwards through the area for cultivation of plants although the supply air is not heated but instead is cooled, which may be necessary in summer.

It is particularly preferred for said air lock to be arranged in a vertical position above said area for cultivation of plants. By the air lock thus being located high up, the air is forced to flow through the entire area containing plants. Downdraught along the walls in the room is also prevented, which would otherwise be unfavourable for both plants and staff.

According to another embodiment of the invention, said air supply device is arranged to conduct heated air from a heating device out to said area for cultivation of plants, and distribute the air so that more air flows where the air is cooler owing to refrigeration while being conveyed from the heating device. This additionally ensures an even distribution of the heat in the room.

According to another embodiment, said air supply device comprises an air conduit. An air conduit may have a simple design in the form of, for instance, an air hose or a cylindrical pipe. Ventilation ducts of a conventional type can be used.

Preferably said air conduit comprises openings arranged in such a manner that said air escapes in an essentially horizontal direction from the openings. By the air being allowed to escape sideways from the air conduit, an even more uniform distribution of the supplied air is provided in the cultivation room, thereby avoiding warm and cold zones.

In a special embodiment, a water pipe is arranged in said air conduit. As a result, the air can be heated instead of refrigerated while being conveyed through the air conduit, whereby the air conduits can be made longer, which is advantageous in the case where larger greenhouses are required. Furthermore, only one heating device, for instance in the form of a heating boiler, is required for heating water to the water pipe even if the greenhouse is large, since water is a more suitable medium for carrying heat in large scale heating plants. For efficient refrigeration of the air, for instance in summer, cold water, not hot water, can be conveyed in the water pipe. For "continuous" adjustment of heating/ refrigeration of the air, it is also possible to mix hot and cold water.

In a particular embodiment thereof, exposing means are arranged on said water pipe. By arranging exposing means, for instance in the form of flanges extending in the longitudinal direction, on the water pipe, more efficient heating/refrigeration of the air is obtained in the air conduit. Moreover the exposing means can advantageously be used to carry the water pipe in the air conduit or, if the air conduit is a hose, instead carry the air conduit round the water pipe.

In another embodiment of the invention, the system further comprises a control system for controlling the climate in said cultivation room. A control system for controlling the climate in the cultivation room has obvious advantages, meaning that the climate by continuous adjustment can be kept as optimal as possible for plants and greenhouse staff, and that the greenhouse staff does not have to check all the time whether the climate in the room is correct.

According to a particular embodiment, said control system is arranged to automatically control the temperature in said cultivation room based on signals from a temperature gauge positioned in the cultivation room. In this way, the temperature can be kept at a level which is favourable for plants and staff by continuous control of the supply of air, the output of the heating device etc.

In one embodiment of the invention, the control system is arranged to automatically control the relative humidity in said cultivation room based on signals from a hygrometer positioned in the cultivation room. By automatic control of the relative humidity, this too can be kept at a favourable level. Control may comprise control of the supply of air, the output of the heating device, the start of a dehumidifier etc.

According to one embodiment, said control system is arranged to automatically control the flow rate of said air based on signals from an instrument for measuring climate parameters which is positioned in said cultivation room, by controlling said fan installation. As is evident from that stated above, control of the flow rate of the air affects both the temperature and the relative humidity in the cultivation room, which means that such control makes it possible to efficiently adjust the climate.

According to another embodiment, the system further comprises a control system for automatic movement of said elongate cultivation tables according to a predetermined schedule. Such a control system gives, for example, advantages in terms of working hours since movements that must take place, for instance, in the night hours can be carried out without staff being present in the greenhouse.

In another embodiment, said control system comprises a program for automatic movement of said elongate cultivation tables according to said predetermined schedule when no one is staying in said work passage, and a program for manually controlled movement of said elongate cultivation tables with a person staying in said work passage. Such a program gives advantages in terms of safety since no automatic movement occurs when staff is present in the work passage, thereby avoiding the risk of injuries caused by shocks and squeezing.

In one more embodiment, the system further comprises at least one vertically adjustable work platform to allow plants to be reached, which are placed in said area for cultivation of plants. A vertically adjustable work platform makes it possible to improve the work ergonomics for staff in the greenhouse in such a manner that the height can be set individually for different people to reach the area for cultivation of plants. This area is preferably supported by cultivation tables. As stated above, cultivation tables can also be arranged in two or more horizontal planes, in which case the utilisation of a vertically adjustable work platform is particularly advantageous.

According to one embodiment, the system comprising a vertically adjustable work platform further comprises a control system for automatic detection of the position of said work platform relative to said area for cultivation of plants. Such a control system for automatic detection of the position of the work platform makes it possible to preset different height conditions for quick setting of the correct working posture but, which may be still more important, a collision between the work platform and cultivation tables can be prevented in the case where the platform is located in a work passage and the greenhouse comprises cultivation tables which can be moved as described above.

According to one embodiment of the invention, said control system is connected to the Internet for remote monitoring and/or control of said system for cultivation of plants. The option of remote monitoring and control via the Internet makes it possible to check the system without staff being required in the greenhouse.

According to another aspect of the present invention, a method for cultivation of plants in a greenhouse comprising two cultivation rooms and an intermediate work passage, and elongate cultivation tables which are arranged to be movable in the longitudinal direction between the cultivation rooms, is characterised in that it comprises the steps of directing a flow of air up through an area for cultivation of the plants, and forcing the directed flow of air.

According to one embodiment, the flow of air is directed so that the air initially flows in a horizontal direction and then deviates upwards through said area for cultivation of the plants.

According to another embodiment, the method further comprises the step of directing said flow of air out of the respective cultivation rooms after the air has passed said area for cultivation of the plants.

### Brief Description of the Drawings

The invention will now be described in more detail with reference to the accompanying drawings, in which
Fig. 1 is a schematic top plan view of a greenhouse comprising two cultivation rooms, with elongate cultivation tables which are movable between the two cultivation rooms, a work passage between the two cultivation rooms, as well as a transport and work zone;
Fig. 2 shows schematically the greenhouse according to Fig. 1 seen from the short side along line II-II in Fig. 1;
Fig. 3 is a top plan view of a cultivation table with an irrigation system. For the sake of clarity, some portions are shown without plant troughs;
Fig. 4 is a cross-section along line III-III in Fig. 3;
Fig. 5 shows schematically the use of a work platform to reach plants on a cultivation table in an upper horizontal cultivation plane;
Fig. 6 is a schematic top plan view of an embodiment of a heating and ventilation system according to the invention;
Fig. 7 is a schematic top plan view of another embodiment of a heating and ventilation system according to the invention;
Fig. 8 is a cross-section along line IV-IV in Fig. 7;
Fig. 9 is a basic sketch, in a side view, of how a heating and ventilation system according to Fig. 6 or 7 is utilised in a cultivation room;
Fig. 10 is a cross-section along line V-V in Fig. 9; and
Fig. 11 is a flow chart illustrating input and output signals to a control system for cultivation of plants according to an embodiment of the invention.

### Description of Preferred Embodiments

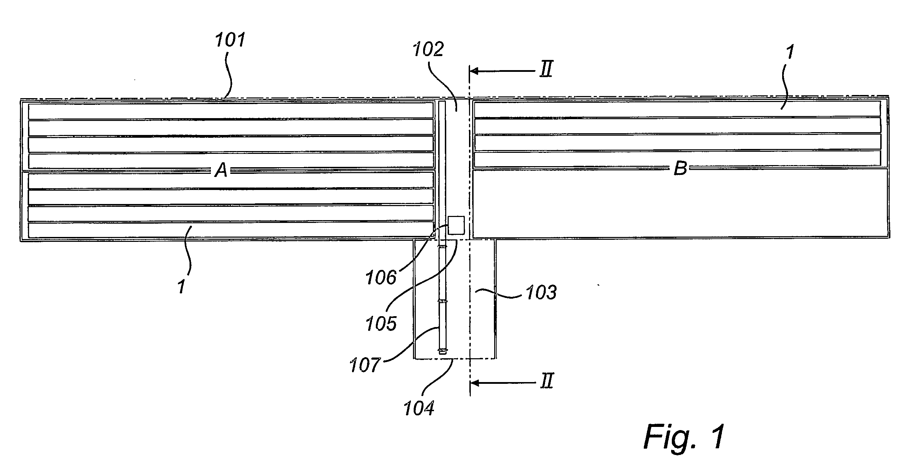

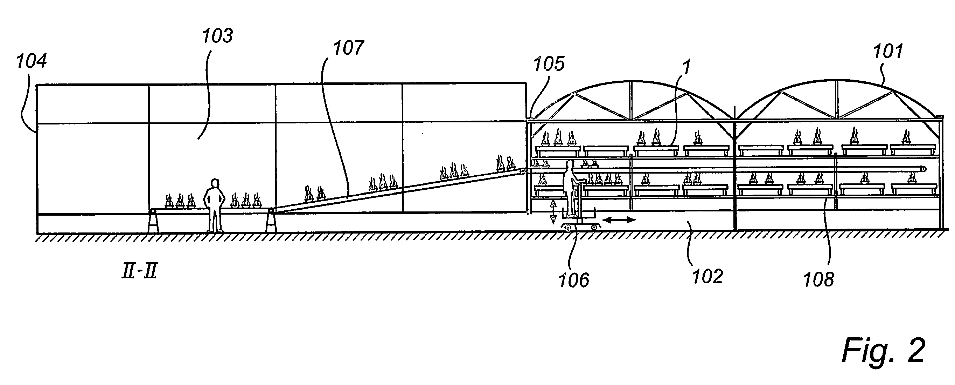

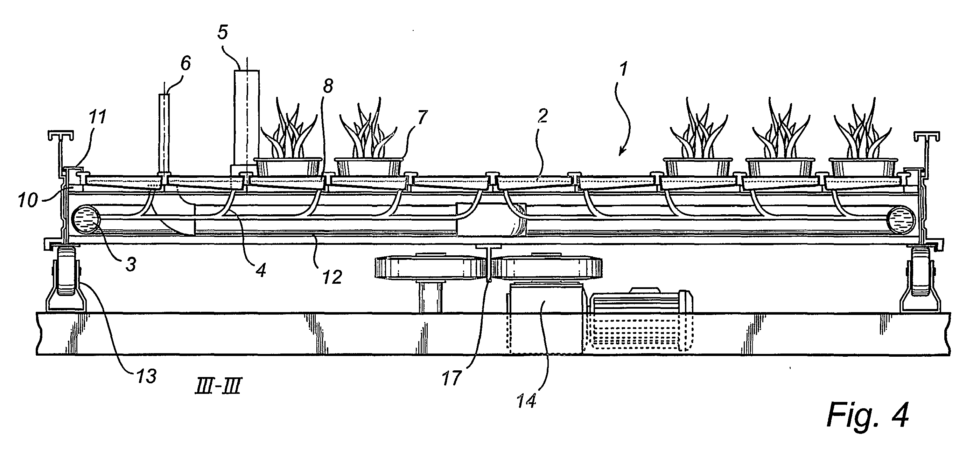

An establishment for cultivation of plants is shown in Figs 1 and 2. The establishment consists of a greenhouse 101 with two cultivation rooms A and B and an intermediate work passage 102 and elongate cultivation tables 1, which in their longitudinal direction are movable between the two cultivation rooms A and B. Moreover, Figs 1 and 2 show a transport and work zone 103, doors 104, 105 and a work platform 106 to allow working at cultivation tables at different levels. A conveyor belt 107 is used to transport plants in both directions. The cultivation tables 1 are supported by rolls 13 (see Fig. 4) which are arranged on a stand 108 and can thus easily be moved between the departments A and B in the greenhouse 101.

This type of greenhouse makes it easy to reach tables at the work passage 102 and allows efficient utilisation of energy as well as cultivation area. Moreover, a large cultivation surface in relation to the size of the cultivation room is obtained, whereby the yield in relation to the heating cost will be greater.

The use of the work passage between the cultivation rooms to reach all the plants means that work with the plants is centralised to this single work passage. In this way, transports and carrying of plants over long distances will be avoided.

The greenhouse may comprise a plurality of cultivation lines which each consist of two cultivation rooms A and B. A plurality of cultivation lines can be arranged in succession. This type of greenhouse gives great advantages since it will be possible to move the cultivation tables 1 between the cultivation rooms and adjust the lighting and climate conditions differently in the different rooms.

Fig. 2 shows how the cultivation tables in each cultivation room A and B are arranged in two planes, so that they can be moved between the departments A and B. In this way, all the cultivation tables can be moved to one of the cultivation rooms, for instance the cultivation room A. This means that the cultivation room B does not have to be heated during the time when the plants are not to be exposed to light.

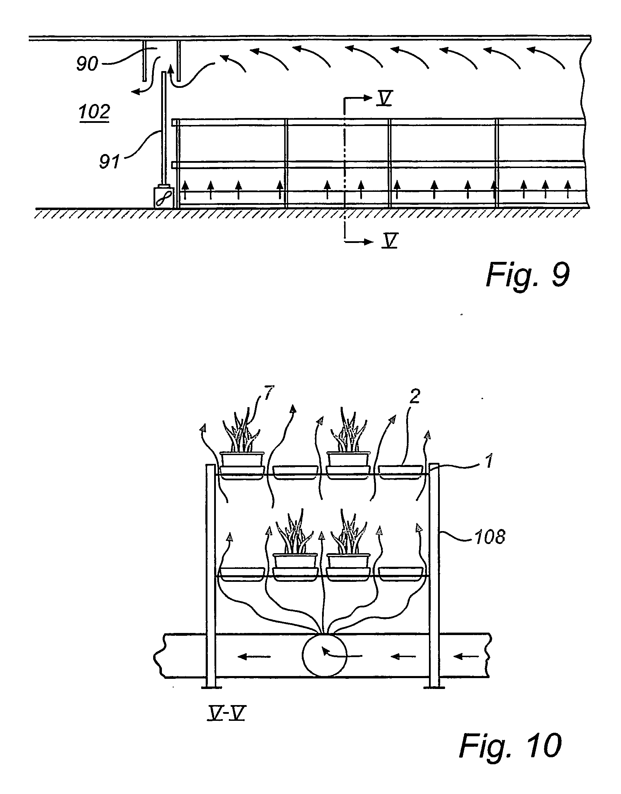

A lowerable wall (designated 91 in Fig. 9), for instance in the form of a curtain, can be used to screen off the cultivation rooms when only one room is to be heated.

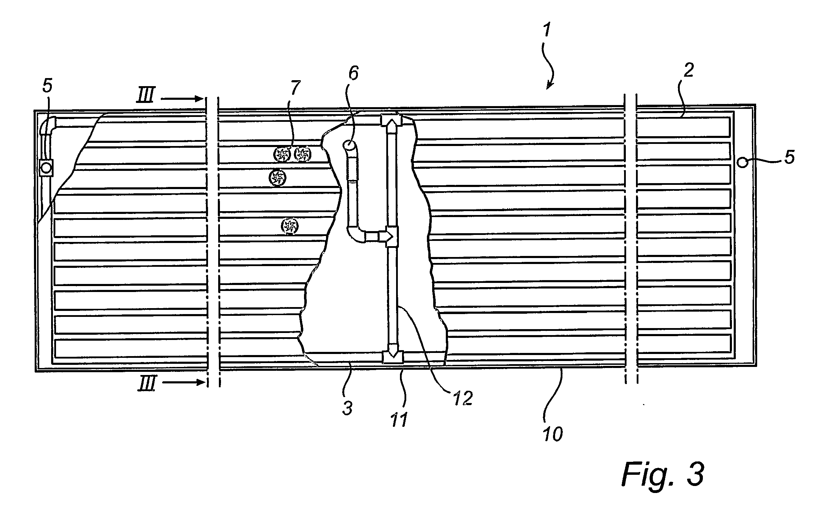

Figs 3 and 4 illustrate a cultivation table 1 comprising a number of plant troughs 2 with openings 8 in the bottom of the plant troughs 2. The plant troughs are elongate and a succession of pot plants 7 can be grown therein. The cultivation table 1 is provided with an irrigation system, which comprises a main pipe 3, which extends in a loop round the table 1 under the plant troughs 2 and is, by a plurality of branch pipes 4, connected to the openings 8.

The irrigation system is based on the principle of ebb and flow irrigation, in which a water level in the bottom of one or more plant troughs is raised, the level is maintained for a certain time and then the plant troughs are drained, i.e. completely emptied of water. The time during which the plants are exposed to water affects the growth and quality of the plants.

The water level in the plant trough 2 is regulated by supplying or discharging water to and from the main pipe 3 that has a greater cross-sectional area. The supply is performed by a supply means 5 in the form of a vertically arranged pipe, which in a certain position of the cultivation table 1 is located under, for example, a fixedly mounted water tap. The discharge is performed by a discharge means 6, here in the form of a drain valve comprising a "tiltable" elastic tube, through which the cultivation troughs 2 are emptied of water when the drain valve is "tilted" to a downwardly sloping position.

The shown irrigation system is based on the principle of using a thick main pipe, which by means of a number of branch pipes with a smaller cross-sectional area is connected to a plurality of openings arranged in the longitudinal direction in the bottom of a cultivation trough, to supply and discharge water and to regulate the water level in the cultivation trough. By using a main pipe, through which the pressure drop over a long distance will be small, to feed water along the longitudinal direction of a cultivation trough, it is ensured that water can be supplied and discharged at the same speed to different positions of the cultivation trough, also in very long cultivation troughs.

The frame 10 of the cultivation table can be assembled of longitudinal girders 11 and transverse girders 12. Shorter reinforcement girders 15 are also arranged at certain points in the longitudinal direction of the cultivation table, which are subjected to greater loads. The cultivation table can be moved in the longitudinal direction for rational handling on rolls 13 arranged for the purpose, on which the table abuts on a plane contact surface of the frame 10. A driving device 14 is arranged for moving the table in the longitudinal direction. The driving device 14 comprises an electric motor, which drives two rubber wheels which in turn engage a central rail 17 on the table 1. Pot plants 7 are grown on the cultivation table, of which only a few are shown.

An advantage of the irrigation system is that the cultivation tables are movable and arranged for supply of water independently of any stationary mechanical connection. This allows easy and free movement of the cultivation tables. Since no mechanical connection is required, the filling procedure will be simple without necessitating the connection of hoses and the like.

Spraying of the plants can take place from a transverse bar (not shown) which is suspended parallel to the work passage 102 while at the same time the cultivation tables 1 are moved from one cultivation room to the other. This is advantageous since manual spraying will not be necessary.

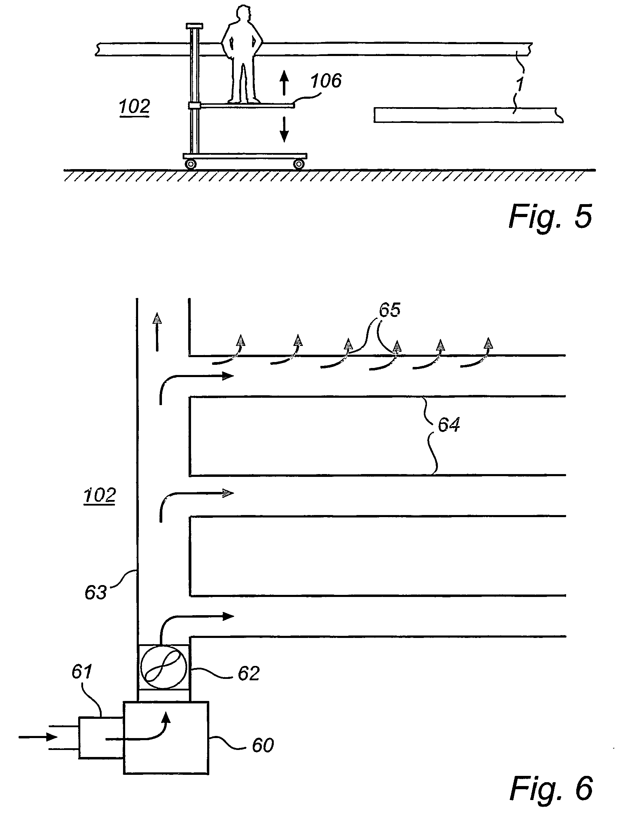

Fig. 5 shows a movable, vertically adjustable work platform 106. The cultivation tables 1 in the upper horizontal plane can be reached by means of the work platform 106 and the ergonomically seen optimal height relationship between the platform 106 and the cultivation table 1 can be set, whether the cultivation table is in the upper or the lower horizontal plane.

Fig. 6 shows an embodiment of a heating and ventilation system which is suitable for the above-described system for cultivation of plants. The system allows efficient heating of a greenhouse room and at the same time makes it possible to set the relative humidity in the room at an appropriate level. The system also allows refrigeration of the room when the temperature in the room would otherwise be too high, for instance in summer.

The system shown in Fig. 6 comprises a heating device 60, for instance in the form of an oil-fired boiler, which is arranged for heating of air. If instead it is desirable to keep or lower the temperature of the air, the heating device is, of course, switched off. The air is preferably drawn from the work passage 102/transport and work zone 103. An air dehumidifier 61 is connected to the heating device 60 and is arranged to dehumidify the air before it is heated in the heating device 60. The need to dehumidify the air has been found to decrease when using the inventive heating and ventilation system, but it may still be desirable to use an air dehumidifier, for instance, when the outdoor relative humidity is high.

Sometimes the reverse need may arise, i.e. that, for instance, on a hot and dry summer day more moisture must be supplied to the room, in which case moistening of the air may take place by sprinklers and mist nozzles (not shown). Another way of moistening the air, which can also effectively be used to lower the temperature of the air, is to arrange a water-cooled grid (not shown) which has a large total surface to which passing air is exposed. The grid is kept wet by means of a sprinkler device so that the passing air is cooled and moistened when hitting the surface of exposure. The grid can be arranged, for example, in a large opening in one of the walls of the greenhouse, or possibly in a house of its own positioned outside the actual greenhouse and connected to the opening.

After the heating device 60, a fan installation 62 is arranged to force the flow of air from the heating device 60 through an air supply device for distributing the air in the cultivation room.

The air supply device, which has the form of an air conduit, comprises in this embodiment a main conduit 63, which extends parallel to the work passage 102, and branch conduits 64 extending along and under the cultivation tables 1. The branch conduits 64, which advantageously consist of perforated plastic film tubes, are in their outer cover formed with openings 65, which allow discharge of air. The openings 65 are preferably arranged in the side of the branch conduits 64, so that the air escapes in an essentially horizontal direction from the openings into the room. Here a more uniform distribution of the supply air is provided in the entire cultivation room.

In this embodiment, the openings 65 are preferably relatively widely scattered close to the main conduit 63 and arranged more closely further away from the main conduit. As a result, the air is distributed so that more air flows where the air is cooler owing to refrigeration while being conveyed from the heating device. Preferably the openings are also more closely arranged along the outer walls of the greenhouse in order to compensate for the refrigeration/heating produced by the outer walls.

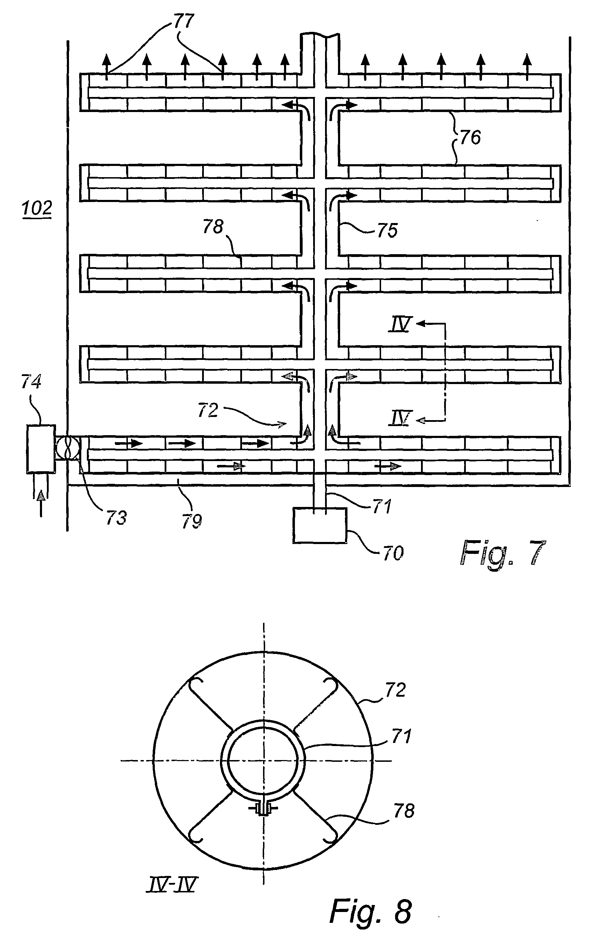

Fig. 7 shows another embodiment of a heating and ventilation system which is suited for the above-described system for cultivation of plants. A heating device 70, for instance in the form of an oil-fired boiler, is arranged to heat water when the temperature in the room needs to be raised. The water is conducted in a water line, here in the form of a water pipe 71 which is arranged inside an air conduit 72. By means of the water pipe 71, the air in the air conduit 72 can be either heated or refrigerated depending on the outer climatic conditions.

The air conduit and the water pipe contained therein here comprises a main conduit 75 which extends parallel to the work passage 102 approximately in the centre of the cultivation room. The main conduit 75 branches off into branch conduits 76 which have openings 77 for discharge of air and extend parallel to and under the cultivation tables. The water pipe 71 is arranged in such a manner that the water, in spite of the "branch structure", is allowed to circulate inside the pipe.

It is particularly preferred that exposing means be arranged on the water pipe, in the form of, for instance, cooling flanges 78 extending in the longitudinal direction, which are better illustrated in Fig. 8. Owing to the exposing means, the heat transfer between the water pipe and the air is improved, and the exposing means can also be used to centre the water pipe 71 in the air conduit 72 as shown in Fig. 8.

Just like in the system according to Fig. 6, the openings 77 are preferably arranged in the side of the branch conduits 76 so that the air escapes in an essentially horizontal direction from the openings into the room. In this embodiment, the openings need not, however, be distributed more closely further away from the main conduit since the water pipe gives the air the correct temperature along the entire extent of the air conduit. However, it may be advantageous to have more openings along the outer walls of the greenhouse to compensate for the effect of the walls on the temperature.

The air is preferably drawn from the work passage 102/transport and work zone 103 through a supply conduit 79. The flow of air is then forced into the branch conduits by means one or more fan installations 73 which are arranged in the supply conduit 79, the main conduit 75 or preferably in the branch conduits 76, so that the air is distributed in the cultivation room. Since the sound level of the fans usually is rather high, it is advantageous to arrange, as shown in Fig. 7, the fan/fans a distance away from the work passage 102. Also a system with no water conduit in the air conduit, as the one shown in Fig. 6, could be arranged in such a manner that the fan/fans are located a distance away from the work passage.

An air dehumidifier 74 can possibly be arranged to dehumidify the air before it is conducted into the main conduit. As stated above, a humidifier can also be used when the need is the opposite.

By providing the air conduit with an insulating casing, efficient reheating of a cultivation room can be effected by controlling the fan installation only, since the air can "be stationary" in the air conduit when the fan installation is turned off so as then, when the fan installation is started, to flow out through the openings of the air conduit. This way of controlling, by means of the fan installation only, the supply of heat is particularly efficient with the system described in Fig. 7, in which the water pipe 71 in the air conduit 72 can keep the temperature of the air in the air conduit.

In an alternative embodiment (not shown) of the invention, the water pipe extends only in the supply conduit, and not in the rest of the air conduit, that is to say the main conduit and the branch conduits. This alternative embodiment can be seen as a compromise between the system shown in Fig. 6 and the system shown in Fig. 7. What can be achieved in such an alternative embodiment is that fans in the main conduit and the branch conduits can continue to work at, for instance, low speed, and thus maintain the ventilation of the cultivation room, but also when it is not desirable to supply heat to the cultivation room while the air in the supply conduit is still heated by the water pipe therein.

The use of the inventive heating and ventilation system in a cultivation room will now be described with reference to Figs 9 and 10. The function described below is provided by the system in Fig. 6 as well as by the system in Fig. 7.

The air drawn from the work passage 102 is dehumidified/humidified and passed through the heating device 60; 70 for optional heating. The fan installation 62; 73 forces the flow of air out through the openings 65; 77 and up through the foliages of the pot plants 7 on the cultivation tables 1 in the cultivation room. The cultivation tables are arranged with the cultivation troughs 2 spaced from each other so that the air flowing upwards is allowed to pass through the foliages of the pot plants 7, see Fig. 10.

When the air has passed the pot plants on the two cultivation planes, it continues to rise and is discharged through an air lock 90 for air to escape from the cultivation room. In this example, the air lock 90 discharges the air into the work passage 102 and is preferably arranged in a vertical position above the cultivation tables 1. In this example, the air lock 90 is arranged above a lowerable wall 91, as mentioned above, adjacent to the work passage 102. With this system, the rising flow of air can be produced even if the supply air has a lower temperature than the existing air in the room since the fan installation 62; 73 by forcing the air flow generates a pressure above atmospheric in the cultivation room, which forces the air to flow upwards towards the air lock 90. The lowerable wall blocks the flow of air towards the work passage 102 and thus acts, just like the other walls of the room, to maintain the pressure above atmospheric in the room. The air lock 90 can further be arranged so that cold air from the cultivation room, when this is not heated, is prevented from entering the work passage 102.

In a greenhouse, which like in the invention comprises two cultivation rooms and an intermediate work passage, lowerable walls, with air locks arranged above the same, are preferably arranged between the respective cultivation rooms and the work passage. Furthermore, the two cultivation rooms preferably have separate heating and ventilation systems so that if one system has a breakdown, all the cultivation tables can be moved, as described above, to the cultivation room whose heating and ventilation system still works.

With the inventive heating and ventilation system, efficient ventilation of the entire cultivating rooms can be provided. In a prototype plant, it has been found that the inventive system can effect more than six total changes of air in the entire cultivation room per hour in full operation. As a rule, however, two to three changes of air per hour are enough to maintain the correct temperature and relative humidity in the cultivation room.

The above-described system for cultivation of plants, and also other cultivation systems, advantageously comprises a control system which can be used to control irrigation processes, movements of tables, regulation of the climate in the cultivation room, emergency procedures etc. A control system facilitates the cultivation of plants in many ways, and at the same time makes it safer. By interconnecting heating and ventilation system, irrigation system, system for moving tables, lighting system etc, a total control of the cultivation can be obtained, with optimisation of all parameters.

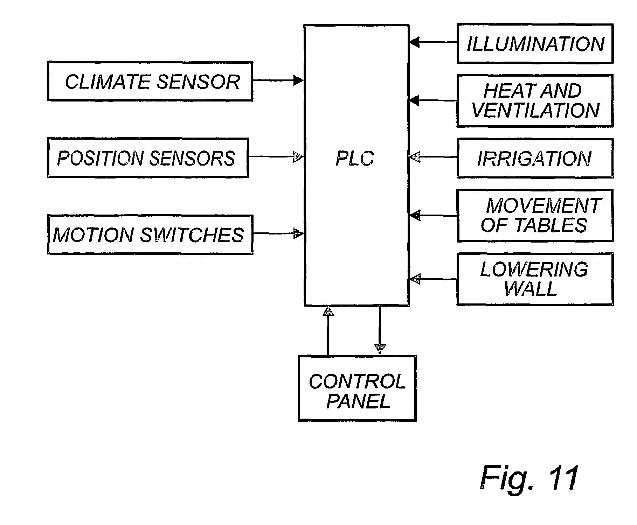

Fig. 11 is a flow chart which in a simplified manner illustrates input and output signals to a computer-based control system for automatic control of, for example, the above-described system for cultivation of plants.

The control system comprises a PLC, which collects signals from different types of sensors in and outside the respective cultivation rooms and sends control signals to the different systems - the heating and ventilation system, the irrigation system, the system for moving tables, the lighting system etc.

For an operator to be able to communicate with the control system and thus be able to monitor and operate the cultivation of plants, use is suitably made of a control panel connected to the PLC. The control panel and the PLC can preferably also be connected, for instance, by a network card to other systems and/or to the Internet. An Internet connection of the control system allows remote monitoring and remote control of the cultivation of plants, which makes it possible to control the cultivation without staff being present in the greenhouse. By a modem, such as a GSM modem, the control system can also communicate via a mobile telephone network, not only via the Internet. This may be advantageous, for example, in different types of emergency procedures when the control system via the mobile telephone network can send, for instance, SMS messages to staff staying in a different place.

For control/regulation of the climate in each cultivation room, the PLC collects signals from climate sensors, such as temperature and moisture sensors which are positioned at suitable points in the cultivation room. Preferably, sensors are also arranged outdoors for measuring outdoor temperature, wind velocity and wind direction, light intensity etc. Based on the input signals from the different sensors, the control system controls automatically the effect of the above-mentioned heating device, turning on or off dehumidifiers/humidifiers, the speed of the above-mentioned fan installations and, thus, the flow rate of the air circulating in the cultivation room, etc. By arranging climate sensors at different points in the cultivation room and separate fans in the different branch conduits for the heating and ventilation system, the control system can distribute the supplied air differently in different parts of the room, thereby compensating for, for example, downdraught along the walls of the greenhouse or a warm sunny side.

The control system can be used to automate irrigation of the plants. Irrigation processes can be started automatically by the control system at predetermined times, input via the control panel, and irrigation can take place, for instance, early in the morning before the staff arrives at the greenhouse. It goes without saying that staff can also carry out irrigation at any time by direct control from the control panel.

The control system makes it possible to move tables between the two cultivation rooms at predetermined times also when the staff is not staying in the greenhouse. To control movement of a cultivation table 1, the PLC collects signals from position sensors, here in the form of limit switches (not shown) under the cultivation table 1, and sends control signals to the driving device 14 (see Fig. 4) which carries out the movement.

The control system can also control spraying of the plants from the above-mentioned transverse bar which is suspended parallel to the work passage while at the same time it controls the movement of the cultivation tables from one cultivation room to the other.

The movement of the cultivation tables 1 can be controlled from the control panel and advantageously also from the work platform 106 (see Fig. 2 or 5). The control from the work platform 106 preferably occurs by means of pedals arranged on the platform, which makes it possible for the person working with pot plants 7 on a cultivation table 1 to have his hands free for this work all the time.

To prevent near-accidents when moving the cultivation tables, the functionality of the control program of the control system can advantageously be divided into two main modes of operation. In one "manual" mode of operation, movements of the tables are controlled manually via the control panel or via the work platform, while in the other "automatic" mode of operation, movements of the tables occur automatically. Due to the risk of accidents in automatic movement of tables, the control program comprises a security function which prevents transfer to the automatic mode of operation when the work platform 106 or a person is located in the work passage 102. Use is made of position sensors to sense the position of the work platform 106 in relation to the cultivation tables 1 and possibly also its vertical position, said sensors preferably being mounted on the work platform 106, and also motion switches or light barriers to sense whether a person is located in the work passage 102.

In the control system described with reference to Fig. 11, different types of security functions and emergency procedures can be implemented. The above-described system for cultivation of plants comprising two cultivation rooms and cultivation tables which are movable between the cultivation rooms makes it possible, for instance, to move the cultivation tables from one cultivation room to the other if, for instance, a defect in the climate control should arise in one room. For instance, if a significant drop in temperature should arise in one of the cultivation rooms, the plants in this room can be saved by the following sequence of measures: heating of the cultivation room which is not subjected to the drop in temperature by increasing the power to the heating device and the fans; raising of the lowerable walls; movement of the cultivation tables from the cold room to the heated room; lowering of the lowerable walls.

In case of a defect that requires immediate measures, whether the control system can remove the defect or not, the control system can, as mentioned above, send SMS messages and thus inform staff staying in a different place.

It will be appreciated that modifications of the above-described systems and methods can be made by those skilled in the art without departing from scope of the invention.

## Claims

1. A system for cultivation of plants in a greenhouse (101) comprising two cultivation rooms (A; B) and an intermediate work passage (102), and elongate cultivation tables (1) which are arranged to be movable in the longitudinal direction between the cultivation rooms (A; B),
an air supply device arranged under said cultivation tables (1) for directing a flow of air up through an area for cultivation of plants on said cultivation tables,
a fan installation (62; 73) for forcing the directed flow of air,
**characterised in that** it further comprises
an air lock (90) for letting out air from said cultivation room (A; B), which air has passed through said area for cultivation of plants.

2. A system as claimed in claim 1, wherein said air lock (90) is arranged in a vertical position above said area for cultivation of plants.

3. A system as claimed in any one of the preceding claims, wherein said air supply device is arranged to conduct heated air from a heating device (60; 70) out to said area for cultivation of plants, and distribute the air so that more air flows where the air is cooler owing to refrigeration while being conveyed from the heating device (60; 70).

4. A system as claimed in claim 1 or 2, wherein said air supply device comprises an air conduit (63; 64; 72).

5. A system as claimed in claim 4, wherein said air conduit (63, 64; 72) comprises openings (65; 77) arranged in such a manner that said air escapes in an essentially horizontal direction from the openings.

6. A system as claimed in claim 4 or 5, wherein a water pipe (71) is arranged in said air conduit (72).

7. A system as claimed in claim 6, wherein exposing means (78) are arranged on said water pipe (71).

8. A system as claimed in any one of the preceding claims, further comprising a control system for controlling the climate in said cultivation room (A; B).

9. A system as claimed in claim 8, wherein said control system is arranged to automatically control the temperature in said cultivation room (A; B) based on signals from a temperature gauge positioned in the cultivation room.

10. A system as claimed in claim 8 or 9, wherein said control system is arranged to automatically control the relative humidity in said cultivation room based on signals from a hygrometer positioned in the cultivation room.

11. A system as claimed in any one of claims 8-10, wherein said control system is arranged to automatically control the flow rate of said air based on signals from an instrument for measuring climate parameters which is placed in said cultivation room, by means of said fan installation (62; 73).

12. A system as claimed in any one of the preceding claims, further comprising a control system for automatic movement of said elongate cultivation tables (1) according to a predetermined schedule.

13. A system as claimed in claim 12, wherein said control system comprises a program for automatic movement of said elongate cultivation tables (1) according to said predetermined schedule when no one is staying in said work passage (102), and a program for manually controlled movement of said elongate cultivation tables (1) with a person staying in said work passage (102).

14. A system as claimed in any one of claims 7-13, wherein said control system is connected to the Internet for remote monitoring and/or control of said system for cultivation of plants.

15. A system as claimed in any one of the preceding claims, further comprising at least one vertically adjustable work platform (106) to allow plants to be reached, which are placed in said area for cultivation of plants on said cultivation tables (1).

16. A system as claimed in claim 15, further comprising a control system for automatic detection of the position of said work platform (106) relative to said cultivation tables (1).

17. A method for cultivation of plants in a greenhouse comprising two cultivation rooms (A; B) and an intermediate work passage (102), and elongate cultivation tables (1) which are arranged to be movable in the longitudinal direction between the cultivation rooms (A; B), said method comprising the steps of
directing a flow of air up through an area for cultivation of the plants on said cultivation tables (1),
forcing the directed flow of air, **characterised in that** the method further comprises a step
generating a pressure above atmospheric in the cultivation room relative to surroundings of the cultivation room (A; B).

18. A method as claimed in claim 17, wherein the flow of air is directed so that the air initially flows in a horizontal direction and then deviates upwards through said area for cultivation of the plants.

19. A method as claimed in claim 18, further comprising the step of directing said flow of air out of the respective cultivation rooms (A; B) after the air has passed said area for cultivation of the plants.

20. A method as claimed in claim 19, wherein said flow of air is directed out of the respective cultivation rooms in a vertical position above said area for cultivation of the plants.

21. A method as claimed in any one of claims 17-20, further comprising the step of distributing the air that is directed up through said area for cultivation of the plants so that more air flows where the air is cooler owing to refrigeration while being conveyed from a heating device.

22. A method as claimed in any one of claims 17-21, further comprising the step of controlling the climate in said cultivation room by means of an automatic control system.

23. A method as claimed in claim 22, further comprising the step of controlling the temperature of said air by means of said automatic control system.

24. A method as claimed in claim 22 or 23, further comprising the step of controlling the humidity of said air by means of said automatic control system.

25. A method as claimed in any one of claims 22-24, further comprising the step of controlling the flow rate of said air by means of said automatic control system.

26. A method as claimed in any one of claims 22-25, further comprising the step of remotely monitoring and/or controlling a system for said cultivation of plants via an Internet connection of said control system.

## Patentansprüche

1. System zur Kultivierung von Pflanzen in einem Treibhaus (101), umfassend:
zwei Kultivierungsräume (A; B) und eine dazwischen befindliche Arbeitspassage (102), und langgestreckte Kultivierungstische (1), die angeordnet sind, um in Längsrichtung zwischen den Kultivierungsräumen (A; B) bewegt zu werden;
eine Luftzufuhrvorrichtung, angeordnet unter den Kultivierungstischen (1), um einen Luftstrom aufwärts durch einen Pflanzenkultivierungsbereich auf den Kultivierungstischen zu führen;
ein Gebläseeinbau (62; 73), um den eingeführten Luftstrom mit Druck zu befördern,
**dadurch gekennzeichnet, dass** es außerdem umfasst: eine Luftschleuse (90) zum Auslassen der Luft aus dem Kultivierungsraum (A; B), welche durch den Pflanzenkultivierungsbereich hindurch geführt wurde.

2. System nach Anspruch 1, wobei diese Luftschleuse (90)in vertikaler Position über dem Pflanzenkultivierungsbereich angebracht ist.

3. System nach einem der vorhergehenden Ansprüche, wobei die Luftzufuhrvorrichtung angebracht ist, um erwärmte Luft von einer Heizvorrichtung (60; 70) ausgehend, zu dem Pflanzenkultivierungsbereich zu führen, und die Luft zu verteilen, so dass mehr Luft dort strömt, wo die Luft kühler ist, aufgrund der Abkühlung während der Beförderung von der Heizvorrichtung (60; 70).

4. System nach Anspruch 1 oder 2, wobei die Luftzufuhrvorrichtung einen Luftkanal (63; 64; 72) umfasst.

5. System nach Anspruch 4, wobei der Luftkanal (63; 64; 72) Öffnungen (65; 77) umfasst, die in der Weise angeordnet sind, dass die Luft im Wesentlichen in horizontaler Richtung aus den Öffnungen entweicht.

6. System nach Anspruch 4 oder 5, wobei eine Wasserleitung (71) in dem Luftkanal (72) angebracht ist.

7. System nach Anspruch 6, wobei an der Wasserleitung (71) Expositionsmittel (78) angebracht sind.

8. System nach einem der vorhergehenden Ansprüche, zusätzlich umfassend ein Steuerungssystem zur Steuerung des Klimas in dem Kultivierungsraum (A; B).

9. System nach Anspruch 8, wobei das Steuerungssystem angebracht ist, um die Temperatur in dem Kultivierungsraum (A; B) automatisch zu steuern, auf der Grundlage von Signalen eines im Kultivierungsraum angebrachten Temperaturmessgerätes.

10. System nach Anspruch 8 oder 9, wobei das Steuerungssystem angebracht ist, um die relative Luftfeuchtigkeit in dem Kultivierungsraum automatisch zu steuern, auf der Grundlage von Signalen eines im Kultivierungsraum angebrachten Hygrometers.

11. System nach einem der Ansprüche 8 - 10, wobei das Steuerungssystem angebracht ist, um den Luftdurchflussmenge automatisch zu steuern, auf der Grundlage von Signalen eines im Kultivierungsraum angebrachten Messinstrumentes für Klimaparameter mittels des vorgenannten Gebläseeinbaus (62; 73).

12. System nach einem der vorhergehenden Ansprüche, zusätzlich umfassend ein Steuerungssystem für die automatische Verschiebung der langgestreckten Kultivierungstische (1) gemäß einem vorbestimmten Zeitplan.

13. System nach Anspruch 12, wobei das Steuerungssystem ein Programm für die automatische Verschiebung der langgestreckten Kultivierungstische (1) gemäß dem vorbestimmten Zeitplan bei Abwesenheit von Personen in der Arbeitspassage (102)umfasst, und ein Programm für die manuell gesteuerte Verschiebung der langgestreckten Kultivierungstische (1) bei Anwesenheit einer Person in der Arbeitspassage (102).

14. System nach einem der Ansprüche 7 - 13, wobei dieses Steuerungssystem mit dem Internet verbunden ist, für Fernüberwachung und/oder Fernsteuerung des Pflanzenkultivierungssystems.

15. System nach einem der vorhergehenden Ansprüche, zusätzlich umfassend wenigstens eine vertikal veränderbare Arbeitsplattform (106), um Pflanzen zu erreichen, die in vorgenanntem Pflanzenkultivierungsbereich auf den Kultivierungstischen (1) stehen.

16. System nach Anspruch 15, zusätzlich umfassend ein Steuerungssystem für die automatische Erfassung der Position der Arbeitsplattform (106) in Relation zu den Kultivierungstischen (1).

17. Verfahren zur Kultivierung von Pflanzen in einem Treibhaus, umfassend:
zwei Kultivierungsräume (A; B) und eine dazwischen befindliche Arbeitspassage (102), und langgestreckte Kultivierungstische (1), die angeordnet sind, um in Längsrichtung zwischen den Kultivierungsräumen (A; B) bewegt zu werden, wobei dieses Verfahren die Schritte umfasst:
einen Luftstrom aufwärts durch einen Pflanzenkultivierungsbereich auf den Kultivierungstischen (1) zu führen, und
den eingeführten Luftstrom mit Druck zu befördern,
**dadurch gekennzeichnet, dass**
das Verfahren zusätzlich einen Schritt umfasst, der einen Druck oberhalb des Atmosphärendrucks in dem Kultivierungsraum in Relation zu der Umgebung des Kultivierungsraums (A; B) erzeugt.

18. Verfahren nach Anspruch 17, wobei der Luftstrom so geführt wird, dass die Luft zunächst in horizontaler Richtung strömt und dann aufwärts abweicht durch den Pflanzenkultivierungsbereich.

19. Verfahren nach Anspruch 18, zusätzlich umfassend den Schritt der Führung des Luftstroms heraus aus den jeweiligen Kultivierungsräumen (A; B), nachdem die Luft durch den Pflanzenkultivierungsbereich hindurch geströmt ist.

20. Verfahren nach Anspruch 19, wobei der Luftstrom aus den jeweiligen Kultivierungsräumen in vertikaler Position oberhalb des Pflanzenkultivierungsbereiches heraus geführt wird.

21. Verfahren nach einem der Ansprüche 17 - 20, zusätzlich umfassend den Schritt der Verteilung der nach oben geführten Luft durch den Pflanzenkultivierungsbereich hindurch, so dass mehr Luft dort strömt, wo die Luft kühler ist, aufgrund der Abkühlung während der Beförderung von einer Heizvorrichtung.

22. Verfahren nach einem der Ansprüche 17 - 21, zusätzlich umfassend den Schritt der Steuerung des Klimas in dem Kultivierungsraum mittels eines automatischen Steuerungssystems.

23. Verfahren nach Anspruch 22, zusätzlich umfassend den Schritt der Steuerung der Lufttemperatur mittels des automatischen Steuerungssystems.

24. Verfahren nach Anspruch 22 oder 23, zusätzlich umfassend den Schritt der Steuerung der Luftfeuchtigkeit mittels des automatischen Steuerungssystems.

25. Verfahren nach einem der Ansprüche 22 - 24, zusätzlich umfassend den Schritt der Steuerung der Luftdurchflussmenge mittels des automatischen Steuerungssystems.

26. Verfahren nach einem der Ansprüche 22 - 25, zusätzlich umfassend den Schritt der Fernüberwachung und/oder Fernsteuerung eines Pflanzenkultivierungssystems mittels einer Internetanbindung des Steuerungssystems.

## Revendications

1. Système de culture de plantes dans une serre (101) comprenant deux chambres de culture (A ; B) ainsi qu'un passage intermédiaire de circulation (102), et des tables de culture allongées (1) qui sont agencées de façon à pouvoir se déplacer dans la direction longitudinale entre les chambres de culture (A ; B),
un dispositif d'alimentation en air installé en dessous desdites tables de culture (1) pour diriger un flux d'air vers le haut à travers une zone de culture de plantes sur lesdites tables de culture,
un système de ventilation (62 ; 73) pour forcer l'écoulement dirigé du flux d'air,
**caractérisé en ce qu'**il comprend par ailleurs :
un sas à air (90) pour permettre à de l'air de s'évacuer hors de ladite chambre de culture (A ; B), après que ce flux d'air est passé au travers de ladite zone de culture de plantes.

2. Système selon la revendication 1, dans lequel ledit sas à air (90) est agencé dans une position verticale au-dessus de ladite zone de culture de plantes.

3. Système selon l'une quelconque des revendications précédentes, dans lequel ledit dispositif d'alimentation en air est agencé de façon à diriger de l'air chauffé à partir d'un dispositif de chauffage (60 ; 70) vers ladite zone de culture de plantes, et pour distribuer l'air de façon à ce qu'une plus grande quantité d'air circule au niveau où l'air est refroidi en vertu du refroidissement tandis qu'il est acheminé à partir du dispositif de chauffage (60 ; 70).

4. Système selon la revendication 1 ou 2, dans lequel ledit dispositif d'alimentation en air comprend une canalisation d'amenée d'air (63 ; 64 ; 72).

5. Système selon la revendication 4, dans lequel ladite canalisation d'amenée d'air (63 ; 64 ; 72) comprend des ouvertures (65 ; 77) qui sont disposées de telle sorte que ledit air s'échappe des ouvertures dans une direction sensiblement horizontale.

6. Système selon la revendication 4 ou 5, dans lequel un tuyau d'alimentation en eau (71) est agencé à l'intérieur de ladite canalisation d'amenée d'air (72).

7. Système selon la revendication 6, dans lequel des moyens d'exposition (78) sont agencés sur ledit tuyau d'alimentation en eau (71).

8. Système selon l'une quelconque des revendications précédentes, comprenant par ailleurs un système de commande pour réguler les conditions climatiques à l'intérieur de ladite chambre de culture (A ; B).

9. Système selon la revendication 8, dans lequel ledit système de commande est configuré de façon à réguler automatiquement la température à l'intérieur de ladite chambre de culture (A ; B) sur la base de signaux délivrés en sortie par une sonde de température placée à l'intérieur de la chambre de culture.

10. Système selon la revendication 8 ou 9, dans lequel ledit système de commande est configuré de façon à réguler automatiquement le taux d'humidité relative à l'intérieur de ladite chambre de culture sur la base de signaux délivrés en sortie par un hygromètre placé à l'intérieur de la chambre de culture.

11. Système selon l'une quelconque des revendications 8 à 10, dans lequel ledit système de commande est configuré de façon à réguler automatiquement le débit d'écoulement dudit flux d'air sur la base de signaux délivrés en sortie par un instrument de mesure de paramètres climatiques qui est placé à l'intérieur de ladite chambre de culture, au moyen du système de ventilation (62 ; 73).

12. Système selon l'une quelconque des revendications précédentes, comprenant par ailleurs un système de commande pour commander un déplacement automatique desdites tables de culture allongées (1) conformément à un programme prédéterminé.

13. Système selon la revendication 12, dans lequel ledit système de commande comprend un programme pour commander un déplacement automatique desdites tables de culture allongées (1) conformément au dit programme prédéterminé quand personne ne se trouve sur le passage de circulation (102), et un programme de commande pour commander manuellement un déplacement contrôlé desdites tables de culture allongées (1) quand une personne se trouve sur le passage de circulation (102).

14. Système selon l'une quelconque des revendications 7 à 13, dans lequel ledit système de commande est connecté à Internet pour une surveillance et / ou une commande à distance dudit système de culture de plantes.

15. Système selon l'une quelconque des revendications précédentes, comprenant par ailleurs au moins une plate-forme de travail (106) réglable en hauteur de façon à pouvoir accéder à des plantes qui sont disposées dans ladite zone de culture de plantes sur lesdites tables de culture (1).

16. Système selon la revendication 15, comprenant par ailleurs un système de commande pour une détection automatique de la position de ladite plate-forme de travail (106) par rapport aux dites tables de culture (1).

17. Procédé de culture de plantes dans une serre comprenant deux chambres de culture (A ; B) ainsi qu'un passage intermédiaire de circulation (102), et des tables de culture allongées (1) qui sont agencées de façon à pouvoir se déplacer dans la direction longitudinale entre les chambres de culture (A ; B), ledit procédé comprenant les étapes consistant à :
diriger un flux d'air vers le haut à travers une zone de culture de plantes sur lesdites tables de culture (1) ; et
forcer l'écoulement dirigé du flux d'air, **caractérisé en ce que** le procédé comprend par ailleurs une étape consistant à :
générer une pression plus élevée que la pression atmosphérique dans la chambre de culture par rapport aux alentours de la chambre de culture (A ; B).

18. Procédé selon la revendication 17, dans lequel le flux d'air est dirigé de telle sorte que, au début, l'air s'écoule dans une direction horizontale, à la suite de quoi il dévie pour circuler vers le haut à travers ladite zone de culture de plantes.

19. Procédé selon la revendication 18, comprenant par ailleurs l'étape consistant à diriger ledit flux d'air hors des chambres de culture respectives (A ; B), après que l'air est passé au travers de ladite zone de culture de plantes.

20. Procédé selon la revendication 19, dans lequel ledit flux d'air est dirigé hors des chambres de culture respectives dans une position verticale au-dessus de ladite zone de culture de plantes.

21. Procédé selon l'une quelconque des revendications 17 à 20, comprenant par ailleurs l'étape consistant à distribuer l'air qui est dirigé vers le haut à travers ladite zone de culture de plantes de façon à ce qu'une plus grande quantité d'air circule au niveau où l'air est refroidi en vertu du refroidissement tandis qu'il est acheminé à partir du dispositif de chauffage.

22. Procédé selon l'une quelconque des revendications 17 à 21, comprenant par ailleurs l'étape consistant à réguler les conditions climatiques à l'intérieur de ladite chambre de culture au moyen d'un système de commande automatique.

23. Procédé selon la revendication 22, comprenant par ailleurs l'étape consistant à réguler la température dudit air au moyen dudit système de commande automatique.

24. Procédé selon la revendication 22 ou 23, comprenant par ailleurs l'étape consistant à réguler le taux d'humidité dudit air au moyen dudit système de commande automatique.

25. Procédé selon l'une quelconque des revendications 22 à 24, comprenant par ailleurs l'étape consistant à réguler le débit d'écoulement dudit flux d'air au moyen dudit système de commande automatique.

26. Procédé selon l'une quelconque des revendications 22 à 25, comprenant par ailleurs l'étape consistant à surveiller et / ou à commander à distance un système pour ladite culture de plantes par le biais d'une connexion Internet dudit système de commande.
